# DEMANDE DE BREVET EUROPEEN

(11) **EP 4 807 489 A1**
(43) Date de publication de la demande: **16.09.2026**
(21) Numéro de dépôt: 26158849.5
(22) Date de dépôt: 16.02.2026
(51) Int. Cl.: G05D 1/87, G05D 105/22, G05D 107/13, G05D 109/22, G05D 111/50

(54) **SYSTÈME ET PROCÉDÉ DE COMMANDES DE VOL D'UN AÉRONEF**

(30) Priorité: 10.03.2025 FR 2502357
(71) Demandeur: Airbus Operations S.A.S., 31060 Toulouse (FR)
(72) Inventeur: FRAGA SERAFIM, Camila, 31060 Toulouse Cedex 9 (FR); DOUKALI, Ismaël, 31700 Blagnac (FR)
(74) Mandataire: Airbus-OPS SAS

(57) **Abrégé**

Le système de commandes de vol (10) comprend des calculateurs primaires (PRIM1, PRIM2, PRIM3) et des calculateurs secondaires (SEC1, SEC2, SEC3) de commandes de vol. Chaque calculateur secondaire est configuré pour :
- déterminer si une situation est vérifiée, dans laquelle aucun calculateur primaire n'est fonctionnel, ledit calculateur secondaire reçoit des informations anémo-inertielles valides de l'aéronef et ledit calculateur secondaire n'a pas reçu d'ordre de pilotage issu d'un organe de pilotage (16), pendant au moins une durée prédéterminée,
- si ladite situation est vérifiée, activer un mode de pilotage dans lequel ledit calculateur secondaire est configuré pour :
. déterminer des angles de roulis et de tangage en fonction d'informations anémo-inertielles de l'aéronef ;
. calculer des ordres de commande d'actionneurs de gouvernes reliés à ce calculateur secondaire de façon à maintenir l'aéronef à plat et à altitude constante ; et
. commander les actionneurs de gouvernes (a1a ... a1n, a2a ... a2p, a3a ... a3q) reliés à ce calculateur secondaire en fonction des ordres calculés.

## Description

L'invention est relative au domaine des commandes de vol des aéronefs. Un système de commandes de vol fait le lien entre les organes de pilotage (par exemple un manche ou un mini-manche dans le cockpit) et les gouvernes aérodynamiques de l'aéronef. Le système de commandes de vol comprend un ensemble de calculateurs de commandes de vol qui déterminent, à partir d'informations reçues des différents organes de pilotage, les ordres à appliquer aux actionneurs des gouvernes. Ces calculateurs de commandes de vol comprennent un ensemble de calculateurs primaires de commandes de vol (PRIM), un ensemble de calculateurs secondaires de commandes de vol (SEC) et un calculateur de secours. Les calculateurs primaires sont prévus pour mettre en œuvre des lois de pilotage automatique de l'aéronef. Les calculateurs secondaires ne sont généralement pas prévus pour mettre en œuvre de telles lois de pilotage automatique. Dans un exemple illustré par le document FR2943036, l'ensemble de calculateurs primaires de commandes de vol comprend trois calculateurs PRIM1, PRIM2, PRIM3 et l'ensemble de calculateurs secondaires de commandes de vol comprend trois calculateurs SEC1, SEC2, SEC3. Les actionneurs des gouvernes, ainsi que les capteurs associés à ces actionneurs, sont généralement reliés aux calculateurs primaires et aux calculateurs secondaires de commandes de vol, par l'intermédiaire de contrôleurs desdits actionneurs de gouvernes. En fonctionnement normal, un calculateur primaire calcule les ordres à appliquer aux gouvernes et applique ces ordres aux actionneurs de gouvernes correspondants, généralement par l'intermédiaire des contrôleurs desdits actionneurs de gouvernes. Plus précisément, en fonctionnement normal, le calculateur primaire PRIM1 calcule les ordres à appliquer à l'ensemble des gouvernes. En cas de défaillance du calculateur PRIM1, le calculateur PRIM2 prend la relève et s'il est défaillant alors c'est le calculateur PRIM3 qui prend la relève. Lorsque tous les calculateurs primaires sont défaillants, les calculateurs secondaires prennent la relève. Chaque calculateur secondaire applique alors les ordres qu'il détermine, aux actionneurs de gouvernes qui lui sont reliés. Si l'aéronef était dans un mode de pilotage automatique, ce mode de pilotage automatique est alors désactivé puisque les calculateurs secondaires ne sont pas prévus pour mettre en œuvre des lois de pilotage automatique. L'aéronef passe alors en mode de pilotage manuel.

En cas de perte de l'ensemble des calculateurs primaires, les actionneurs des gouvernes sont contrôlés par les calculateurs secondaires, chaque calculateur secondaire contrôlant les actionneurs de gouvernes qui lui sont reliés. Si, de plus, un ou deux calculateurs secondaires ne sont plus opérationnels, les actionneurs de gouvernes reliés à ce ou ces calculateurs secondaires ne sont plus commandés. Ces actionneurs sont alors dans un mode dit amorti. Certaines gouvernes peuvent alors ne plus être contrôlées par le système de commandes de vol. Toutefois, les différents actionneurs de gouvernes sont répartis entre les différents calculateurs secondaires de telle façon que l'aéronef reste commandable par un pilote même s'il ne reste qu'un seul calculateur secondaire opérationnel, qui reçoit les ordres du pilote (en particulier entrés au moyen d'un manche ou d'un mini-manche dans le cockpit).

Lors de l'exploitation des aéronefs, il est prévu qu'au moins un pilote soit présent en permanence dans le cockpit, de telle façon que ce pilote peut contrôler l'aéronef en mode de pilotage manuel dans la situation exposée précédemment. Si, dans des circonstances exceptionnelles, ce pilote venait à être indisponible (situation d'incapacité, etc.) alors les calculateurs secondaires ne recevraient plus d'ordres de pilotage manuel. Dans un tel cas, le ou les calculateurs secondaires restant opérationnels continuent à appliquer les derniers ordres de gouvernes qu'ils appliquaient avant la situation de panne. Toutefois, ces ordres pourraient ne pas être suffisants pour contrer les effets de gouvernes qui ne sont plus commandées par d'autres calculateurs secondaires. En effet, des gouvernes non commandées rejoignent généralement leur position de moment de charnière nul en se positionnant dans le flux aérodynamique de l'air et peuvent agir sur les angles de roulis ou de tangage de l'aéronef. Il est alors souhaitable d'éviter que les actions des gouvernes non commandées puissent entraîner un risque de sortie de l'aéronef de son domaine de vol.

Le document US 2012/101663 A1 divulgue un système de commandes de vol d'un aéronef selon l'état de la technique. Le document EP 2812763 B1 divulgue des calculateurs secondaires de commandes de vol d'un aéronef selon l'art antérieur. Le document US 5 493 497 A divulgue un mode de secours selon l'art antérieur, permettant à un pilote de contrôler un aéronef lorsque l'ensemble des calculateurs primaires de commandes de vol ne sont plus fonctionnels.

### EXPOSE DE L'INVENTION :

La présente invention a notamment pour but d'apporter une solution à ce problème. Elle concerne un système de commandes de vol d'un aéronef, le système de commandes de vol comprenant un ensemble de calculateurs primaires de commandes de vol et un ensemble de calculateurs secondaires de commandes de vol, dans lequel chaque calculateur secondaire de commandes de vol est configuré pour recevoir des informations de fonctionnement de chacun des calculateurs primaires de commandes de vol, des informations anémo-inertielles de l'aéronef et des ordres de pilotage issus d'au moins un organe de pilotage de l'aéronef.
Conformément à l'invention, chaque calculateur secondaire de commandes de vol est configuré pour :
- déterminer si une situation est vérifiée, dans laquelle :
   . aucun des calculateurs primaires de commandes de vol n'est fonctionnel ;
   . ledit calculateur secondaire de commandes de vol reçoit des informations anémo-inertielles valides de l'aéronef ; et
   . ledit calculateur secondaire de commandes de vol n'a pas reçu d'ordre de pilotage issu de l'au moins un organe de pilotage de l'aéronef, pendant au moins une durée prédéterminée,
- si ladite situation est vérifiée, activer un mode de pilotage de l'aéronef dans lequel ledit calculateur secondaire de commandes de vol est configuré pour :
   . acquérir des informations anémo-inertielles de l'aéronef ;
   . déterminer des angles de roulis et de tangage de l'aéronef en fonction desdites informations anémo-inertielles de l'aéronef ;
   . calculer des ordres de commande d'actionneurs de gouvernes de l'aéronef reliés à ce calculateur secondaire de commandes de vol de façon à maintenir les angles de roulis et de tangage de l'aéronef à des valeurs nulles pour maintenir l'aéronef à plat et à altitude constante ; et
   . commander les actionneurs de gouvernes reliés à ce calculateur secondaire de commandes de vol en fonction des ordres calculés.

Ainsi, lorsque des gouvernes non commandées (en particulier des gouvernes dont les actionneurs sont reliés à un autre calculateur secondaire de commandes de vol qui est indisponible) agissent sur les angles de roulis et/ou de tangage de l'aéronef, les actions desdites gouvernes sont contrées grâce à l'activation dudit mode de pilotage du calculateur secondaire de commandes de vol considéré, qui commande pour cela d'autres gouvernes de l'aéronef. Cela permet de maintenir l'aéronef sensiblement à plat et à altitude constante et donc de maintenir l'aéronef dans son domaine de vol même en l'absence d'ordres de pilotage donnés par un pilote.

Dans un mode de réalisation, le calculateur secondaire de commandes de vol est en outre configuré pour désactiver ledit mode de pilotage de l'aéronef après l'avoir activé, s'il reçoit au moins un ordre de pilotage issu de l'au moins un organe de pilotage de l'aéronef.

Dans un mode de réalisation, lesdites informations anémo-inertielles de l'aéronef comprennent au moins une altitude courante et un angle de roulis courant de l'aéronef, et le calculateur secondaire de commandes de vol est configuré pour :
- mémoriser une altitude de référence correspondant à une altitude courante de l'aéronef lors de l'activation dudit mode de pilotage ;
- calculer une déviation d'altitude correspondant à une différence entre l'altitude courante de l'aéronef et l'altitude de référence ;
- calculer une déviation d'angle de roulis correspondant à une différence entre l'angle de roulis courant de l'aéronef et une valeur de référence nulle d'angle de roulis ;
- calculer les ordres de commande des actionneurs de gouvernes de l'aéronef sous la forme d'ordres de tangage et d'ordres de roulis de l'aéronef en fonction respectivement desdites déviations d'altitude et d'angle de roulis.

De façon avantageuse, les ordres de tangage et de roulis sont calculés par le calculateur secondaire de commandes de vol de façon à être homogènes avec des ordres de pilotage susceptibles d'être issus de l'au moins un organe de pilotage de l'aéronef et le calculateur secondaire de commandes de vol est configuré pour appliquer les ordres de tangage et de roulis ainsi calculés, à une entrée d'une chaîne de contrôle dudit calculateur secondaire de commandes de vol prévue pour recevoir des ordres de pilotage issus de l'au moins un organe de pilotage de l'aéronef.

Dans un mode particulier de réalisation, le calculateur secondaire de commandes de vol est configuré pour calculer les ordres de tangage en tenant compte d'un terme correctif prévu pour contrôler une vitesse de tangage nulle de l'aéronef.

De façon avantageuse encore, le calculateur secondaire de commandes de vol est configuré pour limiter chacun des ordres de tangage et des ordres de roulis calculés entre une valeur minimale et une valeur maximale, ces valeurs minimale et maximale correspondant respectivement à des limites minimale et maximale admissibles de valeurs d'ordres de pilotage issus de l'au moins un organe de pilotage de l'aéronef.

L'invention est également relative à un procédé de commandes de vol d'un aéronef comportant un système de commandes de vol comprenant un ensemble de calculateurs primaires de commandes de vol et un ensemble de calculateurs secondaires de commandes de vol, dans lequel chaque calculateur secondaire de commandes de vol est configuré pour recevoir des informations de fonctionnement de chacun des calculateurs primaires de commandes de vol, des informations anémo-inertielles de l'aéronef et des ordres de pilotage issus d'au moins un organe de pilotage de l'aéronef.

Le procédé comporte les étapes suivantes mises en œuvre par chaque calculateur secondaire de commandes de vol :
- déterminer si une situation est vérifiée, dans laquelle :
   . aucun des calculateurs primaires de commandes de vol n'est fonctionnel ;
   . ledit calculateur secondaire de commandes de vol reçoit des informations anémo-inertielles valides de l'aéronef ; et
   . ledit calculateur secondaire de commandes de vol n'a pas reçu d'ordre de pilotage issu de l'au moins un organe de pilotage de l'aéronef, pendant au moins une durée prédéterminée,
- si ladite situation est vérifiée, activer un mode de pilotage de l'aéronef comprenant les étapes suivantes :
   . acquérir des informations anémo-inertielles de l'aéronef ;
   . déterminer des angles de roulis et de tangage de l'aéronef en fonction desdites informations anémo-inertielles de l'aéronef ;
   . calculer des ordres de commande d'actionneurs de gouvernes de l'aéronef reliés à ce calculateur secondaire de commandes de vol de façon à maintenir les angles de roulis et de tangage de l'aéronef à des valeurs nulles pour maintenir l'aéronef à plat et à altitude constante ; et
   . commander les actionneurs de gouvernes reliés à ce calculateur secondaire de commandes de vol en fonction des ordres calculés.

Dans un mode de réalisation, lesdites informations anémo-inertielles de l'aéronef comprennent au moins une altitude courante et un angle de roulis courant de l'aéronef et le procédé comprend les étapes suivantes mises en œuvre par le calculateur secondaire de commandes de vol :
- mémoriser une altitude de référence correspondant à une altitude courante de l'aéronef lors de l'activation dudit mode de pilotage ;
- calculer une déviation d'altitude correspondant à une différence entre l'altitude courante de l'aéronef et l'altitude de référence ;
- calculer une déviation d'angle de roulis correspondant à une différence entre l'angle de roulis courant de l'aéronef et une valeur de référence nulle d'angle de roulis ;
- calculer les ordres de commande des actionneurs de gouvernes de l'aéronef sous la forme d'ordres de tangage et d'ordres de roulis de l'aéronef en fonction respectivement desdites déviations d'altitude et d'angle de roulis.

Dans un mode particulier de réalisation, l'étape de calcul des ordres de commande des actionneurs comprend calculer les ordres de tangage en tenant compte d'un terme correctif prévu pour contrôler une vitesse de tangage nulle de l'aéronef.

L'invention est également relative à un aéronef comprenant un système de commandes de vol tel que précité.

### DESCRIPTION DETAILLEE :

L'invention sera mieux comprise à la lecture de la description qui suit et à l'examen des figures annexées.
La figure 1 illustre un aéronef équipé d'un système de commandes de vol conforme à un mode de réalisation de l'invention.
La figure 2 illustre de façon schématique un système de commandes de vol conforme à un mode de réalisation de l'invention.
La figure 3 illustre un procédé de commandes de vol conforme à un mode de réalisation de l'invention.

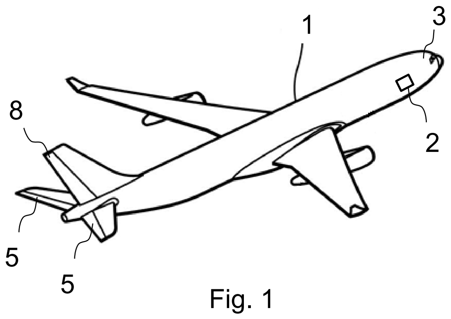

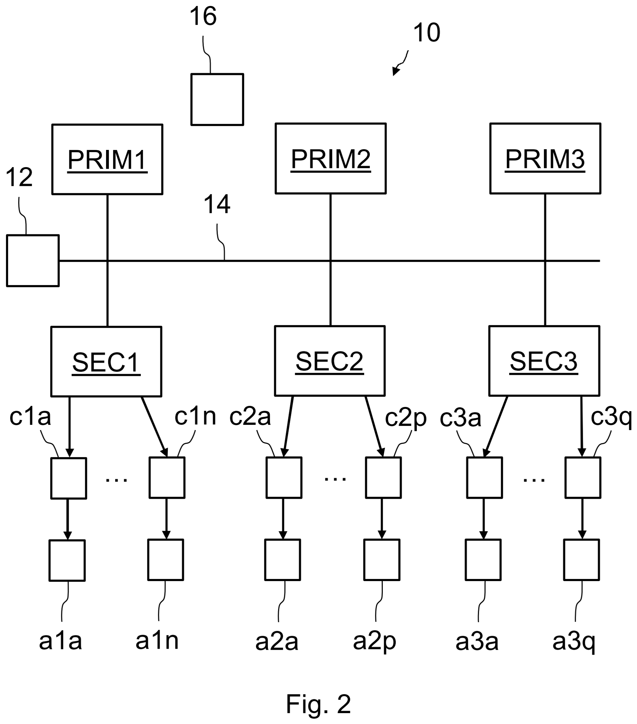

Le système de commandes de vol 10 représenté sur la figure 2 comprend un ensemble de calculateurs primaires de commandes de vol PRIM1, PRIM2, PRIM3, ainsi qu'un ensemble de calculateurs secondaires de commandes de vol SEC1, SEC2, SEC3 d'un aéronef, tel que l'aéronef 1 représenté sur la figure 1. Ces différents calculateurs sont reliés à un réseau de communication avionique 14, par exemple conforme au standard ARINC 429 ou au standard ARINC 664 part 7. Un ensemble de sources d'informations 12 est également relié au réseau de communication avionique 14. Cet ensemble de sources d'informations 12 comprend notamment au moins une source d'informations anémo-inertielle de l'aéronef, par exemple de type ADIRU (« Air Data and Inertial Reference Unit » en anglais). Les différents calculateurs primaires et secondaires sont aussi reliés à au moins un organe de pilotage 16 tel qu'un manche ou un mini-manche placé dans un cockpit 3 de l'aéronef. Pour des raisons de clarté de la figure, les liaisons entre les calculateurs et l'organe de pilotage 16 ne sont pas représentées. Chacun des calculateurs secondaires de commandes de vol est relié à un ensemble de contrôleurs d'actionneurs de gouvernes de l'aéronef. Ainsi, le calculateur SEC1 est relié à un ensemble de contrôleurs de gouvernes c1a ... c1n prévus pour contrôler des actionneurs de gouvernes respectifs a1a ... a1n, le calculateur SEC2 est relié à un ensemble de contrôleurs de gouvernes c2a ... c2p prévus pour contrôler des actionneurs de gouvernes respectifs a2a ... a2p et le calculateur SEC3 est relié à un ensemble de contrôleurs de gouvernes c3a ... c3q prévus pour contrôler des actionneurs de gouvernes respectifs a3a ... a3q. Ces actionneurs de gouvernes sont prévus pour contrôler des gouvernes de l'aéronef 1 telles que des gouvernes de profondeur 5, une gouverne de direction 8 ou encore des gouvernes non représentées en détail sur la figure 1, telles que des spoilers, des volets, etc. associés aux ailes de l'aéronef. Les calculateurs primaires et secondaires de commandes de vol sont par exemple implantés dans une baie avionique 2 de l'aéronef. De façon particulière, lorsqu'une gouverne est reliée à plusieurs actionneurs, par exemple deux ou trois actionneurs, chacun desdits actionneurs est contrôlé par un contrôleur relié à un calculateur secondaire de commandes de vol distinct parmi l'ensemble de l'ensemble de calculateurs secondaires de commandes de vol SEC1, SEC2, SEC3. Par exemple, un premier actionneur est contrôlé par un contrôleur relié au calculateur SEC1 et un deuxième actionneur est contrôlé par un contrôleur relié au calculateur SEC2.

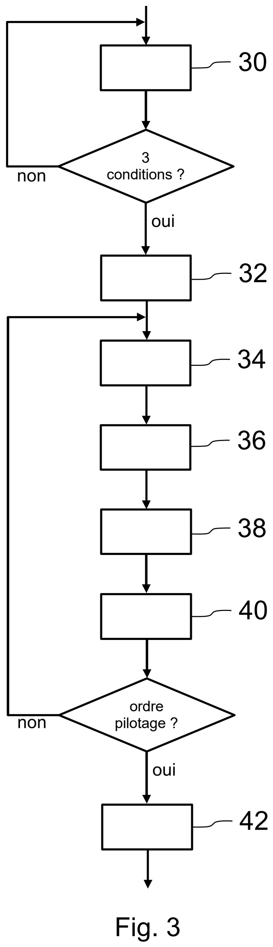

En fonctionnement, au cours d'une première étape 30 du procédé illustré sur la figure 3, chaque calculateur secondaire de commandes de vol opérationnel SEC1, SEC2, SEC3 détermine de façon répétitive si une situation est vérifiée, dans laquelle les trois conditions suivantes sont vérifiées :
- aucun des calculateurs primaires de commandes de vol PRIM1, PRIM2, PRIM3 n'est fonctionnel ;
- ledit calculateur secondaire de commandes de vol reçoit des informations anémo-inertielles valides de l'aéronef ; et
- ledit calculateur secondaire de commandes de vol n'a pas reçu d'ordre de pilotage issu de l'au moins un organe de pilotage 16 de l'aéronef, pendant au moins une durée prédéterminée.

La première condition, selon laquelle aucun des calculateurs primaires de commandes de vol PRIM1, PRIM2, PRIM3 n'est fonctionnel, est évaluée comme dans les calculateurs secondaires de l'état de la technique qui évaluent cette condition pour déterminer s'ils doivent prendre la relève des calculateurs primaires de commande de vol lorsque ceux-ci sont défaillants. Elle est par exemple basée sur l'échange de statuts des différents calculateurs de commande de vol au moyen du réseau de communication avionique 14.

La deuxième condition, selon laquelle le calculateur secondaire de commandes de vol doit recevoir des informations anémo-inertielles valides de l'aéronef, est considérée remplie lorsqu'un système anémo-inertiel, par exemple de type ADIRU, faisant partie de l'ensemble de sources d'informations 12 fonctionne et ledit calculateur secondaire de commandes de vol reçoit régulièrement des informations issues dudit système anémo-inertiel. De préférence, les informations anémo-inertielles de l'aéronef comprennent au moins une altitude courante et un angle de roulis courant de l'aéronef.

Pour l'évaluation de la troisième condition, selon laquelle le calculateur secondaire de commandes de vol n'a pas reçu d'ordre de pilotage issu de l'au moins un organe de pilotage 16 de l'aéronef pendant au moins une durée prédéterminée, ladite durée prédéterminée est par exemple choisie dans un intervalle de durées [1sec ; 30sec], de préférence 1 seconde.

Le calculateur secondaire de commandes de vol évalue ces trois conditions de façon répétitive, par exemple selon une périodicité prédéterminée, tant qu'elles ne sont pas vérifiées de façon simultanée. La périodicité prédéterminée est par exemple choisie dans un intervalle [0,1sec ; 10sec], de préférence 1 seconde.

Lorsque lesdites trois conditions sont vérifiées, dans une deuxième étape 32 du procédé, le calculateur secondaire de commandes de vol active un mode particulier de pilotage de l'aéronef. Le calculateur secondaire de commandes de vol acquiert en outre une information d'altitude courante de l'aéronef et il mémorise une altitude de référence correspondant à la valeur de ladite altitude courante de l'aéronef. De façon particulière, l'altitude de référence est mémorisée dans une mémoire faisant partie dudit calculateur secondaire de commandes de vol.

Après avoir activé le mode particulier de pilotage à la deuxième étape 32, le calculateur secondaire de commandes de vol met en œuvre de façon répétitive la suite d'étapes suivantes 34, 36, 38 et 40.

Dans une troisième étape 34, le calculateur secondaire de commandes de vol acquiert des informations anémo-inertielles de l'aéronef issues du système anémo-inertiel, par exemple de type ADIRU, faisant partie de l'ensemble de sources d'information 12. De préférence, ces informations anémo-inertielles comprennent notamment une altitude courante et un angle de roulis courant de l'aéronef.

Dans une quatrième étape 36, le calculateur secondaire de commandes de vol détermine des angles de roulis et de tangage courants de l'aéronef en fonction desdites informations anémo-inertielles de l'aéronef.

Dans une cinquième étape 38, le calculateur secondaire de commandes de vol calcule des ordres de commande d'actionneurs de gouvernes de l'aéronef reliés à ce calculateur secondaire de commandes de vol, par l'intermédiaire de leurs contrôleurs respectifs, de façon à maintenir les angles de roulis et de tangage de l'aéronef à des valeurs nulles pour maintenir l'aéronef à plat (c'est-à-dire horizontal) et à altitude constante.

Dans une sixième étape 40, le calculateur secondaire de commandes de vol envoie ces ordres de commande aux contrôleurs respectifs desdits actionneurs, de façon à commander les actionneurs de gouvernes reliés à ce calculateur secondaire de commandes de vol en fonction des ordres calculés à la cinquième étape 38.

Au cours des étapes 34, 36, 38 et 40, le calculateur secondaire de commandes de vol surveille la réception éventuelle d'un ordre de pilotage issu de l'au moins un organe de pilotage 16. Tant qu'aucun ordre de pilotage n'est reçu, le calculateur secondaire de commandes de vol continue de mettre en œuvre les étapes 34, 36, 38 et 40 de façon répétitive, en particulier selon une périodicité prédéterminée par exemple comprise dans l'intervalle [10ms ; 1sec] de préférence 0,1sec. Si un ordre de pilotage est reçu, au cours d'une septième étape 42 le calculateur secondaire de commandes de vol désactive ledit mode particulier de pilotage de l'aéronef. Cela permet à un pilote de l'aéronef de reprendre le pilotage de l'aéronef en mode de pilotage manuel. Dans un tel cas, de préférence, le calculateur secondaire de commandes de vol n'essaie plus, par la suite, de réactiver ledit mode particulier de pilotage.

Dans un mode de réalisation, à la quatrième étape 36, le calculateur secondaire de commandes de vol calcule une déviation d'altitude Δalti correspondant à une différence entre l'altitude courante de l'aéronef et l'altitude de référence. Il calcule également une déviation d'angle de roulis correspondant à une différence entre l'angle de roulis courant de l'aéronef et une valeur de référence nulle d'angle de roulis. Cette déviation d'angle de roulis est donc égale à la valeur de l'angle de roulis courant de l'aéronef. A la cinquième étape 38, le calculateur secondaire de commandes de vol calcule les ordres de commande des actionneurs de gouvernes de l'aéronef sous la forme d'ordres de tangage et d'ordres de roulis de l'aéronef en fonction respectivement desdites déviations d'altitude et d'angle de roulis.

De façon particulière, le calculateur secondaire de commandes de vol calcule les ordres de tangage Otgt et de roulis Φtgt en appliquant les formules suivantes : $Θtgt = - k 1 \times Δalti$ et $Φtgt = - k 3 \times Φ$ dans lesquelles :
Δalti est ladite déviation d'altitude
Φ est ladite déviation d'angle de roulis (égale à l'angle de roulis courant)
k1 et k3 sont des gains de préférence de valeurs constantes.

Les valeurs des gains k1 et k3 sont par exemple réglées par le constructeur de l'aéronef de façon à ce que les angles de tangage et de roulis de l'aéronef convergent le plus efficacement possible vers des valeurs nulles d'angles de tangage et de roulis de façon à ramener l'aéronef dans une attitude dans laquelle il vole à plat et à altitude constante.

Dans un mode particulier de réalisation, le calculateur secondaire de commandes de vol calcule les ordres de tangage et de roulis de telle façon que ces ordres soient homogènes avec des ordres de pilotage susceptibles d'être issus de l'au moins un organe de pilotage 16 de l'aéronef. En particulier, les ordres ainsi calculés sont rendus homogènes aux signaux issus de l'organe de pilotage 16, lesquels correspondent à des déviations angulaires de l'organe de pilotage respectivement associées aux axes de tangage et de roulis. Le calculateur secondaire de commandes de vol injecte les ordres de tangage et de roulis ainsi calculés, en entrée d'une chaîne de contrôle recevant habituellement les ordres de tangage et de roulis issus de l'organe de pilotage 16. Cela permet de réutiliser cette chaîne de contrôle pour calculer les ordres de commande des actionneurs en fonction des ordres de tangage Θtgt et de roulis Φtgt calculés par le calculateur secondaire de commandes de vol. Cela facilite ainsi la mise en œuvre dudit mode particulier de pilotage.

Dans un mode avantageux de réalisation, l'ordre de tangage Θtgt est calculé en tenant compte d'un terme correctif prévu pour éviter des oscillations de l'angle de tangage autour d'une valeur nulle d'angle de tangage Θ = 0 lorsque l'aéronef vole sensiblement à l'altitude de référence Aref. Pour cela, dans ce mode préféré de réalisation, le calculateur secondaire de commandes de vol fait en outre l'acquisition d'un angle de tangage Θ courant, parmi les informations anémo-inertielles issues du système anémo-inertiel, par exemple de type ADIRU.

Le fait d'éviter des oscillations de l'angle de tangage est équivalent à voler avec un angle de tangage stabilisé, c'est-à-dire un objectif de variations d'angle de tangage nulles. Une vitesse d'angle de tangage VO est définie comme étant égale à la dérivée de l'angle de tangage par rapport au temps : VΘ = dΘ / dt.

Par conséquent, l'objectif de variations d'angle de tangage nulles peut être exprimé comme correspondant à une valeur de référence VOref de la vitesse d'angle de tangage égale à 0.

Une déviation courante ΔVΘ de vitesse d'angle de tangage par rapport à cette valeur de référence est égale à : $ΔVΘ = VΘ - VΘref$ or VΘref = 0, donc : $ΔVΘ = VΘ = dΘ / dt$

Le terme correctif de l'ordre d'angle de tangage est égal à : $- k 2 \times ΔVΘ = - k 2 \times dΘ / dt$

En prenant en compte ce terme correctif, l'ordre d'angle de tangage corrigé est égal à : $Θtgt = \left(-k1\times Δalti\right) + \left(-k2\times dΘ/dt\right)$ k2 est un gain de préférence de valeur constante.

La valeur du gain k2 est par exemple réglée par le constructeur de l'aéronef de façon à ce que les angles de tangage et de roulis de l'aéronef convergent le plus efficacement possible vers des valeurs nulles d'angles de tangage et de roulis de façon à ramener l'aéronef dans une attitude dans laquelle il vole à plat et à altitude constante.

De façon avantageuse, les ordres de tangage Θtgt et de roulis Φtgt calculés par le calculateur secondaire de commandes de vol sont limités à l'intérieur d'intervalles de valeurs définis pour limiter la dynamique de réaction à ces ordres, de façon à éviter des réactions trop brusques de l'aéronef. Par exemple, ces intervalles sont définis de façon à correspondre à des ordres de l'organe de pilotage 16 inclus dans un intervalle [-18° ;+18°] pour l'axe de tangage et dans un intervalle [-20° ;+20°] pour l'axe de roulis.

## Revendications

1. Système de commandes de vol (10) d'un aéronef (1), le système de commandes de vol comprenant un ensemble de calculateurs primaires de commandes de vol (PRIM1, PRIM2, PRIM3) et un ensemble de calculateurs secondaires de commandes de vol (SEC1, SEC2, SEC3), dans lequel chaque calculateur secondaire de commandes de vol est configuré pour recevoir des informations de fonctionnement de chacun des calculateurs primaires de commandes de vol, des informations anémo-inertielles de l'aéronef et des ordres de pilotage issus d'au moins un organe de pilotage (16) de l'aéronef, **caractérisé en ce que** chaque calculateur secondaire de commandes de vol (SEC1, SEC2, SEC3) est configuré pour :
- déterminer si une situation est vérifiée, dans laquelle :
. aucun des calculateurs primaires de commandes de vol n'est fonctionnel ;
. ledit calculateur secondaire de commandes de vol reçoit des informations anémo-inertielles valides de l'aéronef ; et
. ledit calculateur secondaire de commandes de vol n'a pas reçu d'ordre de pilotage issu de l'au moins un organe de pilotage (16) de l'aéronef, pendant au moins une durée prédéterminée,
- si ladite situation est vérifiée, activer un mode de pilotage de l'aéronef dans lequel ledit calculateur secondaire de commandes de vol est configuré pour :
. acquérir des informations anémo-inertielles de l'aéronef ;
. déterminer des angles de roulis et de tangage de l'aéronef en fonction desdites informations anémo-inertielles de l'aéronef ;
. calculer des ordres de commande d'actionneurs de gouvernes de l'aéronef reliés à ce calculateur secondaire de commandes de vol de façon à maintenir les angles de roulis et de tangage de l'aéronef à des valeurs nulles pour maintenir l'aéronef à plat et à altitude constante ; et
. commander les actionneurs de gouvernes (a1a ... a1n, a2a ... a2p, a3a ... a3q) reliés à ce calculateur secondaire de commandes de vol en fonction des ordres calculés.

2. Système de commandes de vol selon la revendication 1, **caractérisé en ce que** ledit calculateur secondaire de commandes de vol (SEC1, SEC2, SEC3) est en outre configuré pour désactiver (42) ledit mode de pilotage de l'aéronef après l'avoir activé, s'il reçoit au moins un ordre de pilotage issu de l'au moins un organe de pilotage (16) de l'aéronef.

3. Système de commandes de vol selon l'une des revendications 1 ou 2, **caractérisé en ce que** lesdites informations anémo-inertielles de l'aéronef comprennent au moins une altitude courante et un angle de roulis courant de l'aéronef, et **en ce que** le calculateur secondaire de commandes de vol (SEC1, SEC2, SEC3) est configuré pour :
- mémoriser une altitude de référence correspondant à une altitude courante de l'aéronef lors de l'activation dudit mode de pilotage ;
- calculer une déviation d'altitude correspondant à une différence entre l'altitude courante de l'aéronef et l'altitude de référence ;
- calculer une déviation d'angle de roulis correspondant à une différence entre l'angle de roulis courant de l'aéronef et une valeur de référence nulle d'angle de roulis ;
- calculer les ordres de commande des actionneurs de gouvernes de l'aéronef sous la forme d'ordres de tangage et d'ordres de roulis de l'aéronef en fonction respectivement desdites déviations d'altitude et d'angle de roulis.

4. Système de commandes de vol selon la revendication précédente, **caractérisé en ce que** les ordres de tangage et de roulis sont calculés par le calculateur secondaire de commandes de vol (SEC1, SEC2, SEC3) de façon à être homogènes avec des ordres de pilotage susceptibles d'être issus de l'au moins un organe de pilotage (16) de l'aéronef et le calculateur secondaire de commandes de vol est configuré pour appliquer les ordres de tangage et de roulis ainsi calculés, à une entrée d'une chaîne de contrôle dudit calculateur secondaire de commandes de vol prévue pour recevoir des ordres de pilotage issus de l'au moins un organe de pilotage de l'aéronef.

5. Système de commandes de vol selon l'une des revendications 3 ou 4, **caractérisé en ce que** ledit calculateur secondaire (SEC1, SEC2, SEC3) de commandes de vol est configuré pour calculer les ordres de tangage en tenant compte d'un terme correctif prévu pour contrôler une vitesse de tangage nulle de l'aéronef.

6. Système de commandes de vol selon l'une quelconque des revendications 3 à 5, **caractérisé en ce que** ledit calculateur secondaire de commandes de vol (SEC1, SEC2, SEC3) est configuré pour limiter chacun des ordres de tangage et des ordres de roulis calculés entre une valeur minimale et une valeur maximale, ces valeurs minimale et maximale correspondant respectivement à des limites minimale et maximale admissibles de valeurs d'ordres de pilotage issus de l'au moins un organe de pilotage (16) de l'aéronef.

7. Procédé de commandes de vol d'un aéronef (1) comportant un système de commandes de vol (10) comprenant un ensemble de calculateurs primaires de commandes de vol (PRIM1, PRIM2, PRIM3) et un ensemble de calculateurs secondaires de commandes de vol (SEC1, SEC2, SEC3), dans lequel chaque calculateur secondaire de commandes de vol est configuré pour recevoir des informations de fonctionnement de chacun des calculateurs primaires de commandes de vol, des informations anémo-inertielles de l'aéronef et des ordres de pilotage issus d'au moins un organe de pilotage (16) de l'aéronef,
**caractérisé en ce qu'**il comporte les étapes suivantes mises en œuvre par chaque calculateur secondaire de commandes de vol (SEC1, SEC2, SEC3) :
- déterminer (30) si une situation est vérifiée, dans laquelle :
. aucun des calculateurs primaires de commandes de vol n'est fonctionnel ;
. ledit calculateur secondaire de commandes de vol reçoit des informations anémo-inertielles valides de l'aéronef ; et
. ledit calculateur secondaire de commandes de vol n'a pas reçu d'ordre de pilotage issu de l'au moins un organe de pilotage (16) de l'aéronef, pendant au moins une durée prédéterminée,
- si ladite situation est vérifiée, activer (32) un mode de pilotage de l'aéronef comprenant les étapes suivantes :
. acquérir (34) des informations anémo-inertielles de l'aéronef ;
. déterminer (36) des angles de roulis et de tangage de l'aéronef en fonction desdites informations anémo-inertielles de l'aéronef ;
. calculer (38) des ordres de commande d'actionneurs de gouvernes de l'aéronef reliés à ce calculateur secondaire de commandes de vol de façon à maintenir les angles de roulis et de tangage de l'aéronef à des valeurs nulles pour maintenir l'aéronef à plat et à altitude constante ; et
. commander (40) les actionneurs de gouvernes (a1a ... a1n, a2a ... a2p, a3a ... a3q) reliés à ce calculateur secondaire de commandes de vol en fonction des ordres calculés.

8. Procédé de commandes de vol selon la revendication 7, **caractérisé en ce que**, lesdites informations anémo-inertielles de l'aéronef comprenant au moins une altitude courante et un angle de roulis courant de l'aéronef, le procédé comprend les étapes suivantes mises en œuvre par le calculateur secondaire de commandes de vol (SEC1, SEC2, SEC3) :
- mémoriser une altitude de référence correspondant à une altitude courante de l'aéronef lors de l'activation dudit mode de pilotage ;
- calculer une déviation d'altitude correspondant à une différence entre l'altitude courante de l'aéronef et l'altitude de référence ;
- calculer une déviation d'angle de roulis correspondant à une différence entre l'angle de roulis courant de l'aéronef et une valeur de référence nulle d'angle de roulis ;
- calculer les ordres de commande des actionneurs de gouvernes de l'aéronef sous la forme d'ordres de tangage et d'ordres de roulis de l'aéronef en fonction respectivement desdites déviations d'altitude et d'angle de roulis.

9. Procédé de commandes de vol selon la revendication précédente, **caractérisé en ce que** l'étape de calcul des ordres de commande des actionneurs comprend calculer les ordres de tangage en tenant compte d'un terme correctif prévu pour contrôler une vitesse de tangage nulle de l'aéronef.

10. Aéronef (1), **caractérisé en ce qu'**il comprend un système de commandes de vol (10) selon l'une quelconque des revendications 1 à 6.
